# EUROPEAN PATENT SPECIFICATION

(11) **EP 0 650 614 B1**
(45) Date of publication and mention of the grant of the patent: **26.04.2000**
(21) Application number: 93916062.8
(22) Date of filing: 13.07.1993
(51) Int. Cl.: G06F 9/38, G06F 15/78

(54) **DIGITAL SIGNAL PROCESSOR ARCHITECTURE**
ARCHITEKTUR EINES DIGITALSIGNALPROZESSORS.
ARCHITECTURE DE PROCESSEUR DE SIGNAL NUMERIQUE

(30) Priority: 13.07.1992 FR 9208663
(43) Date of publication of application: 03.05.1995
(73) Proprietor: TEXAS INSTRUMENTS FRANCE, 06271 Villeneuve Loubet Cédex (FR); TEXAS INSTRUMENTS INCORPORATED, Dallas, TX 75265 (US)
(72) Inventor: CHAUVEL, Gérard, F-06600 Antibes (FR); LAURENTI, Gilbert, F-06570 S.-Paul-de-Vence (FR); CIROUX, Jean, F-06650 Le Rouret (FR); WENZINGER, Yves, F-06650 Le Rouret (FR); DENT, Peter, Bedford MK41 7EL (GB)
(74) Representative: Legg, Cyrus James Grahame
(86) International application number: GB9301469
(87) International publication number: WO9401816

(56) References cited:
- US-A- 4 240 142
- US-A- 4 319 325
- HITACHI REVIEW vol. 33, no. 2, April 1984, TOKYO JP pages 57 - 60 SHINKICHI HOTTA, HISAYOSHI SHIMIZU 'New 4-bit Single-Chip Microcomputer HMCS404'
- AFIPS CONFERENCE PROCEESINGS June 1982, HOUSTON, TEXAS, US pages 87 - 93 'Architectural Comparisons'
- PATENT ABSTRACTS OF JAPAN vol. 015, no. 515 (P-1293)27 December 1991 & JP,A,3 223 960 ( MITSUBISHI ELECTRIC CORP. ) 2 October 1991

## Description

The present invention concerns processors, and it relates more particularly to a processor especially adapted to applications of digital telephony.

A certain number of applications of digital telephony use a complete standard, ADPCM G721 for voice encoding/decoding. A digital signal processor, DSP, Standard, such as TMS320C25 requires 1300 cycles for sampling at 8 kHz (10.4 Mips).

The invention envisions creating a new architecture, BBSP, for a broadband signal processor, optimized to reduce, on the one hand, the number of cycles to below 1000 and energy consumption on the other. The list of operations to be performed in the G721 standard are shown in Table I.

**TABLE I**

| FUNCTIONS | NUMBER |
|---|---|
| Add/subtract | 122 |
| AND | 65 |
| Preshift, right | 53 |
| Preshift, left | 46 |
| Test bit | 37 |
| 2-complement | 24 |
| Dynamic shift | 22 |
| Normalization | 12 |
| XOR | 11 |
| MPY 6*6 | 8 |
| Post-shift | 11 |
| MPY 13*7 | 1 |

Shift unit: the preshift, postshift, and normalization functions represent 144 operations out of 415.

The shift value varies from 1 to 15 bits to the right or left. Immediate or calculated values are used at the time.

Test bit: The G721 standard is characterized by a number of indications of conditional inclusion access, where the result of the test defines execution of one or more groups of actions.

Multiplier: The G721 standard requires a multiplication function. The TMS320C25, likewise with a multiplier, is not acceptable from the point of view of economy. The Booth algorithm, with the technique of shifting and addition, is more suitable, and only reduces processor performance by 3%.

ALU: a 16-bit ALU arithmetic and logic unit is necessary.

Command: A subroutine of G721 requires specific functionality in order to reduce the cycle count and the dissipation of energy, such as a block of repetitive instructions, retarded ramification and return, a normalization block, and others.

The structures of existing processors do not have these capacities and cannot perform efficiently: shifts, normalization, conditional execution, low-cost multiplication in a 16-bit data path.

The broadband signal processor (BBSP) uses a Harvard architecture, modified to improve speed and flexibility.

In a Harvard architecture, the program and data memories are located in two separate places, permitting total recovery from the call and execution of instructions.

The invention envisions creating a processor architecture that has the performance indicated above while staying at a moderate cost price.

The article in the 1982 AFRIPS Conference proceedings at pages 87-93 discloses a Harvard architecture single chip microcomputer having an arithmetic logic unit with inputs connected to the data outputs of a RAM and an accumulator register, and outputs connected to the data inputs of the accumulator register and the RAM. Control signals for directing the operation of the computer are provided by an instruction decoder which receives instructions from a ROM. The ROM is addressed by a ROM address register, which register has a control input for causing the address held in it to be incremented and which may be loaded with a value provided by the instruction decoder. The RAM is addressed by its own address register which may be loaded with a value provided by the instruction decode or the arithmetic logic unit.

EP 0 092 429 discloses a von Neumann architecture computer in which the central processing unit includes and instruction buffer, a micro sequencer, an arithmetic logic unit and a number of "general purpose" registers, one of which is used as a program counter.

US 3 614 741 discloses a von Neumann architecture computer which has a central processing unit comprising an arithmetic unit and a plurality of registers which include a program counter. The program counter may be connected as an input to the arithmetic unit and the output of the arithmetic unit may be stored in the program counter.

According to the present invention there is provided a processor, comprising:
a program memory for storing instructions,
a data memory for storing data to be processed, the program memory and data memory having different address spaces,
a central processing unit including an arithmetic logic unit and a plurality of registers, connected to the data memory,
a program counter for providing addresses to the program memory, and
a program controller for receiving instructions from the program memory specified by the provided addresses to produce control signals in response to those instructions, characterised in that
the program counter and at least one other of the said registers are each selectively connectable to the arithmetic logic unit as a source register or as a destination register.

The invention will be understood better with the aid of the following description, given only by way of example, and referring to the attached diagrams, in which:
- Figure 1 is an overall scheme of the architecture of a broadband signal processor or BBSP;
- Figure 2 is a scheme of the program-execution part of the central processing unit of the BBSP of Figure 1;
- Figure 3 is a scheme of the data-processing part of the central processing unit;
- Figure 4 is a partial schematic view of an LMO, the leftmost one, block of operation registers in the central processing unit;
- Figure 5 is a partial schematic view of a program-counter block that is likewise a part at the CPU registers;
- Figure 6 is a partial schematic view of the X and B registers of the central processing unit;
- Figure 7 is a partial schematic view of a block comprising register M and the shift register used to execute the Booth algorithm;
- Figure 8 is a partial schematic view of the status and control register of the central processing unit;
- Figure 9 is a scheme showing the contents of the program-counter register of Figure 5;
- Figure 10 is a partial schematic view of the arithmetic and logic unit and of the shift unit of the architecture of Figure 1;
- Figure 11 is a scheme showing the functioning of the shift unit in immediate shifting;
- Figure 12 is a scheme showing the functioning of the shift unit in dynamic shifting;
- Figs. 13a and 13b are partial schematic views illustrating the functioning of certain registers of the CPU, the shift unit, and the arithmetic and logic unit, respectively with one the leftmost and in dynamic shifting;
- Figure 14 shows the memory field of the BBSP according to the invention;
- Figure 15 is a scheme showing operand addressing in direct and indirect modes;
- Figure 16 illustrates the functioning in pipeline mode of the BBSP architecture according to the invention;
- Figure 17 is a representation of the instruction format decoded in the control part of the core of the BBSP; and
- Figure 18 shows the instruction codes used in the architecture according to the invention.

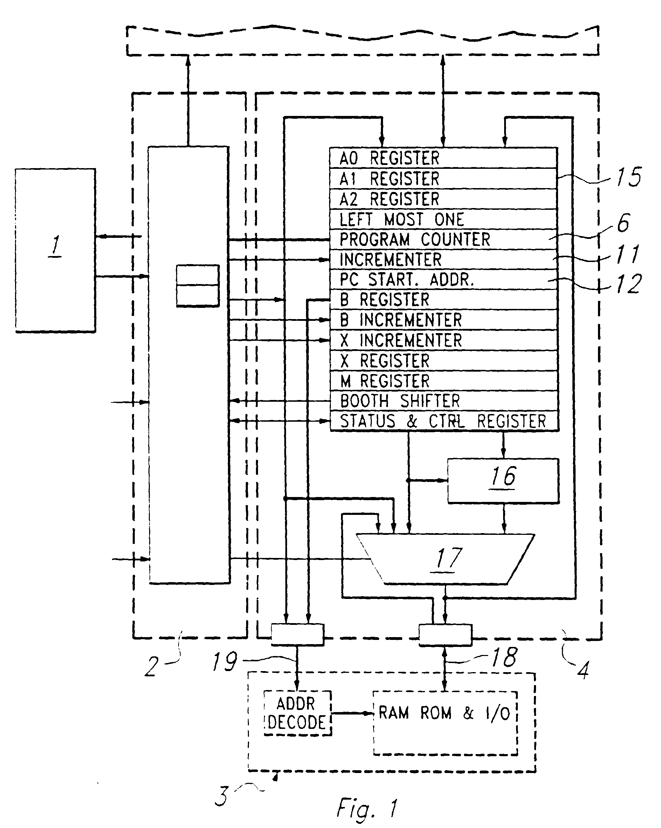

As shown in Figure 1, the architecture of the BBSP broadband signal processor comprises principally three blocks.

The core of the BBSP consists of the CPU central processing unit 2 and 4, a program memory 1, and a data memory 3.

The CPU is a 16-bit processor, which is divided functionally into two parts:
- a program-execution part 1 and 2,
- a data-processing part 4.

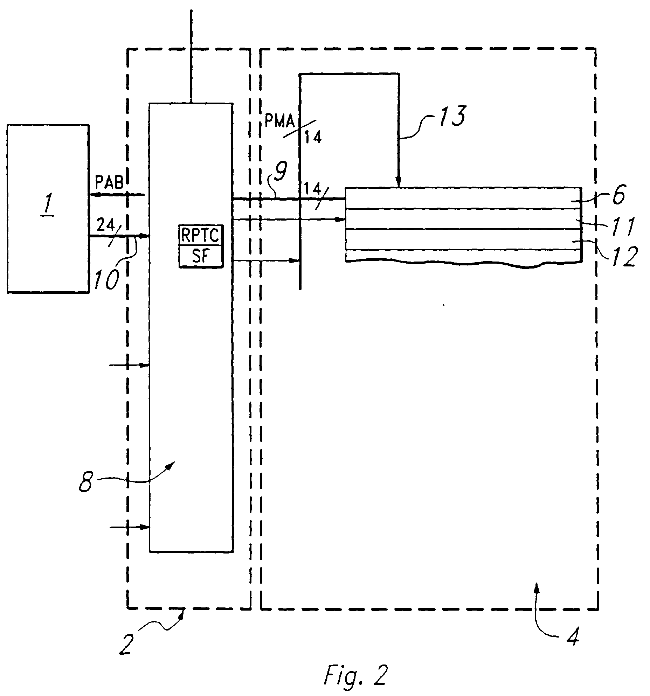

The program-execution part shown in Figure 2 comprises a 14-bit program counter 6, and controller 8, and the program memory 1, which is a ROM.

The program counter 6 addresses the program-memory ROM 1 via a 14-bit program-address bus 9.

The controller 8 receives instructions from memory 1 via a 24-bit instruction bus 10, and decoding is assured in a decoder functioning in pipeline mode.

The controller block 8 includes a 6-bit RPTC command-repetition-counter circuit (Figure 2) for repeating the instructions in a block and an up-and-down counter of memory-stack address for stacking the pointers used to save the context during the course of interruptions or the execution of subroutines.

The program counter 6 is associated with an incrementing device 11 and an addressing device 12.

In order to reduce the silicon surface used and to improve performance and programming flexibility, the program counter 6, the incrementing device 11, and the addressing device 12 of the program counter are placed in the data-processing part 4.

In each cycle, the program counter 6 generates the PAB address and calls an instruction in the ROM program memory 1.

Normally, the program counter 6 is incremented by 1 by the incrementing device 11.

When there is a branch, an interrupt, or a loading of the program counter 6, the status of this counter is modified by a PMA value of a program-memory address transmitted to the counter 6 by a 14-bit bus 13 coming from an instruction decoder or from the arithmetic and logic unit found in the data-processing part.

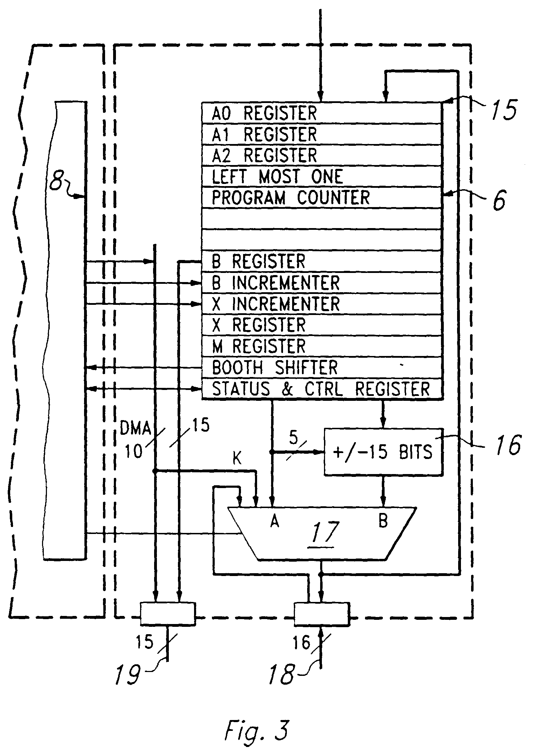

Part 4 of the data-processing part will now be described with reference to Figure 3.

It consists of a stack of 16-bit registers 15, a shift unit 16, and a 16-bit ALU arithmetic and logic unit 17.

The data-processing part is connected to the data-memory block 3 (Figure 1) by a 16-bit data bus 18 and by a 15-bit address bus 19.

The arithmetic and logic unit 17 performs operations on 16-bit words from register to register and direct or indirect memory operations to a register in one instruction.

One instruction is executed during each machine cycle. In addition to the usual arithmetic instruction, the ALU 17 can assure operations providing the bit-manipulation capacity required of a high-speed controller.

The shift unit 16 situated at the input of the ALU 17 permits logic or arithmetic shifting to the left or to the right of the contents of a register by 0 to 15 bits, to take place before the execution by the ALU 17 of an operation on the contents.

Input A of the ALU receives a 16-bit word from the register stack 15, from the data-memory 3 (Figure 1), or from the controller 8.

Input B of the ALU is connected only to the register stack 15 through the shift unit 16.

The output of the ALU 17 is connected to the registers 15 and to the data memory 3.

The operations of the ALU 17 with the shift unit 16 permit extraction in two instructions (and 2 CPU cycles) of the mantissa and the exponent of a number.

A multiplication operation is executed in multiple instructions of one cycle each (MPY/MPY1).

The multiplication instructions use the Booth algorithm with a shifting and addition process.

The CPU central processing unit of the BBSP contains eight internal 16-bit registers, which can be used as universal registers or as specialized registers with a dedicated function.

Registers X and B can be used for indirect addressing, with a possibility of postincrementing.

Register 6 is used as a program counter.

Register M is used for multiplication with a shift of 2 bits to the right.

Register A2 is the destination register for normalization of instructions.

SW is the status register.

The organization of the CPU and of the BBSP memory will now be described.

The functional diagram of Figure 1 shows the principal data blocks and paths in the BBSP.

The CPU of the BBSP contains eight internal registers, which are the following:
Register X is a 16-bit register or an indirect register.
Register B is a 16-bit register or an indirect register.
Register A0 is a 16-bit register.
Register A1 is a 16-bit register.
Register A2 is a 16-bit register.
Register M is a 16-bit register or a Booth shift register.
Register SW is a status or command register.
Register PC 6 is a 14-bit program counter.

All these registers can be source and/or destination operands of an instruction executed by the ALU. These registers and their use will be described later.

All the internal registers are universal registers. They can be used as source and/or destination operands. To improve the performance of the central processing unit CPU for applications of digital telephony using compression algorithms of the ADPCM type, certain universal registers have specific functions that are directed by a code of instructions. The registers with specific functions work in parallel with the ALU arithmetic and logic unit 17.

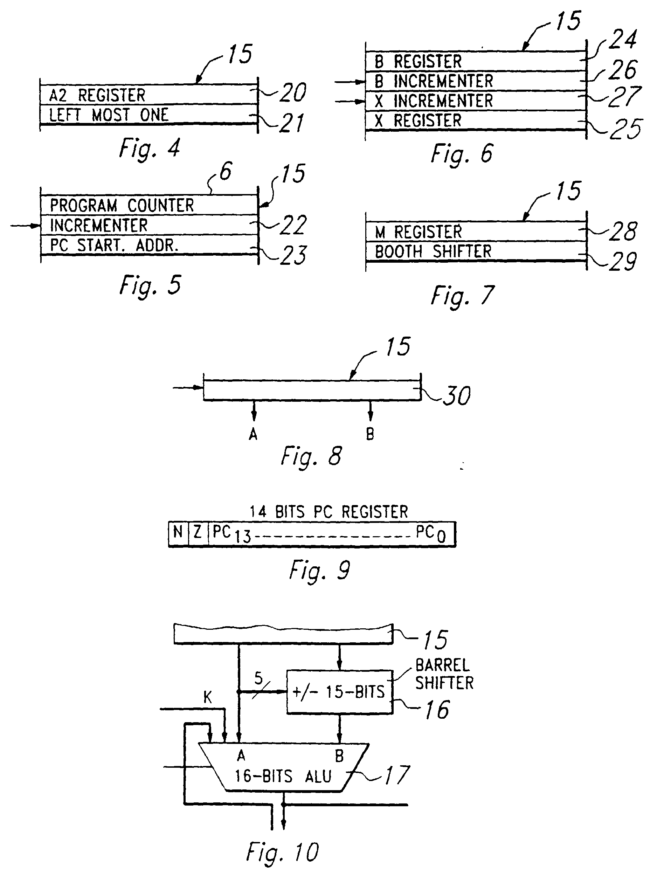

Register A2 and LMO block 1 with leftmost one are shown in Figure 4 at 20 and 21 respectively.

When an LMO code of instructions of with leftmost 1 is specified, the result of the leftmost 1 operation is placed in register A2 20.

The result of this operation is the number of contiguous zeros coming from the most significant bit of the source. The purpose is normalization of a positive number.

The program counter 6 is a 14-bit register that contains the program-memory address of the next instruction to be executed.

The BBSP reads the instruction coming from the program-memory location addressed by the program counter 6 and increments the program counter for calling the next instruction.

The program counter 6 is initialized to zero after the device has been powered on. Bits 14 and 15 of the program counter are not used for addressing; an operation that reads these bits gives bit N and bit Z for bits 15 and 14.

A write operation on these bits will have no action, and N and Z are not modified.

The value of the program counter 6 can be modified by branching, jumping to a subroutine, return, and an operation where the program counter 6 is used as a destination register.

This last possibility is used for a calculated branch. Calculated branches are retarded, which means that the instructions following the calculated branch are executed before the effective branching.

For example:
- LD (X), PC;: calculated branch
- ST X, AO;: executed instruction
- ADD A0, A1;: non-executed instruction
"ST X, A0" is executed before the branch, "ADD A0, A1" is executed.

A repetition instruction of the instruction block permits creation of a loop without loss of CPU cycle time.

This function has been implemented by creating an RPTB instruction, which specifies the number of loops as a parameter, and a condition (?EOL), which specifies the next-to-last instruction of the loop.

The RPTB instruction transfers the starting address of the loop into a register 23 that starts the program counter 6. It also stores in the repetition counter 22 of the control block 8 (Figure 2) the number of the loop to be executed.

The next-to-last instruction should be conditional, with the condition ?EOL. This condition alone means that the program counter will be loaded with the starting address after the next instruction.

The indirect registers B and X 24 and 25 shown in Figure 6, are both connected to a corresponding incrementing device 26,27, which functions in parallel with the ALU. Indirect addressing is specified within the instruction code, and uses either register X or register B as an address register.

They can be autoincremented after instruction execution, if that is specified.

MPY is a phase of the Booth multiplication algorithm. The operation is determined by the two least significant bits of register M 28 and the preceding 1 bit of M in the previous MPY or MPY1 operation. MPY1 is the first phase of the Booth algorithm.

MPY and MPY1 are shown in the table below:

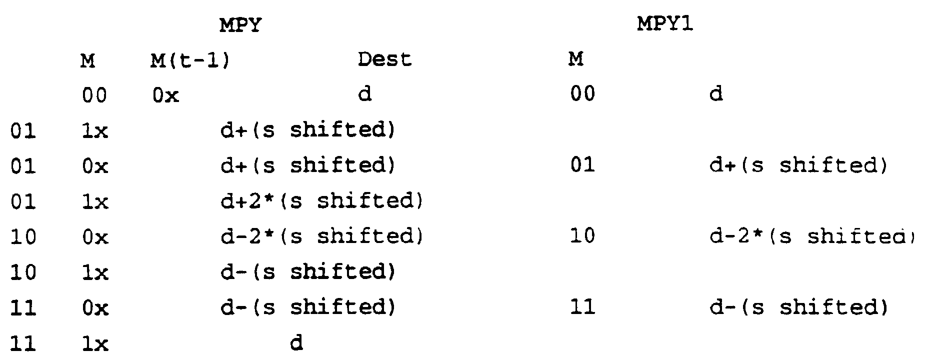

Register M 28 is logically shifted 2 bits to the right after the operations MPY and MPY1.

The start of a multiplication should be MPY1.

A multiplication of 2n bits with sign should be MPY1 followed by n-1 MPY's.

A multiplication of 2n-1 bits without sign should by MPY1 followed by n-1 MPY's.

When an interruption is produced, the M(t-1)th bit is not saved, which means that if the interrupt subroutine uses MPY or MPY1, it can modify the result of a multiplication performed in the interrupted subroutine.

The status register 30 is shown in Figure 8.

It contains status bits, flags, and command bits.

All conditional instructions use these status bits to determine the flow of a program. The notations and definitions of the bits of the status register are the following:

| | | |
|---|---|---|
| * bit 0 | U | user bit established or re-established by the user; this bit is used in the condition ?U. |
| * bit 1 | U1 | user bit has been established or re-established by the user. |
| * bit 2 | B/L | selection mode for reading/writing of the data memory. |
| * bit 3 | E1 | Interrupts with global authorization. This bit authorizes/inhibits maskable interrupts of the BBSP. |
| | | 0 = inhibition of the maskable global interrupt request. |
| | | 1 = authorization of the maskable global interrupt request. |
| * bit 4 | E11 | Interrupt of authorization 1:1 = authorized interrupt, 0 = inhibited interrupt. |
| * bit 9 | C | Carry: this status bit is established by arithmetic instructions when the operation gives a carry. |
| | | A subtraction A - B is considered as an addition A + (-B), and the carry is established in consequence (inverse of remainder). |
| | | C = 0 if A < B; C = 1 if A ≥ B. |
| | | The operation A NEG A is performed as an addition of !A + 1, and a carry is established in consequence. |
| * bits 10-12 | D10-12 | Page number for direct addressing. |
| * bit 13 | PZ | Preceding zero: PZ is a one-level stack for bit Z. PZ is loaded with Z when the status update has been requested. |
| * bit 14 | Z | Zero: set to one by the CPU if the result of the preceding operation was 0; otherwise erased. |
| *bit 15 | N | Negative: the CPU sets this bit to the value of the most significant (sign) bit of the result of the previous operation. |

The condition bits, N, Z, PZ, C, indicate the result of the previous instruction. They are updated each time a status update (US) is requested by the instruction.

When the BBSP recognizes an interruption, a jump subroutine (JSR) is executed, and condition bits N, Z of the status register (SW) are automatically pushed onto the stack. These condition bits are combined with the 14 least significant bits of the program counter 6 and then pushed onto the same word in the stack.

The normal exit out of the subroutine is assured by the instruction to return ram the subroutine, RTS. When the BBSP executes the RTS instruction to return from the subroutine, it automatically resets the contents of the program counter with and unstacking operation.

The two status bits, N, Z, are not stored, and remain in the state they had before the RTS instruction (Figure 9).

Normal exit from an interrupt is effected with the RTI instruction to return from a program interrupt. When the BBSP executes an RTI instruction, it automatically resets the contents of the program counter with an unstacking operation. The two status bits, N, Z, are reset, starting from the stack.

The SP stack pointers will now be considered.

The stack functions as a circular read/write memory, last in, first out. The stack is of the kind typically used for storing the return address in subroutine calls or of interruptions and condition flags of the status registers 30. The SP stack pointer is a 4-bit counter, which points to the first 16 words in the data memory, starting with the address 0x0 through 0x1E (16 words of 16 bits). This counter cannot be accessed directly by the programmer.

The SP pointer points only to a word, never to a byte, even if the instruction is an instruction in the form of a byte.

The stack pointer is used by the instructions JSR, RTS, RTI, when one enters an interruption subroutine and when the stack pointer is used for indirect addressing.

Pushing the stack (JSR and interrupt) is storing an address defined by the stack pointer and an incrementing of the stack pointer, in this order (postincrementing the SP). Popping the stack (RTS and RTI) is provided by a decrement of the stack pointer (predecrementing the SP). Therefore, this is a reading of the address defined by the new value in the SP.

The shift unit 16 and the arithmetic and logic unit 17 will now be described with reference to Figure 10.

The shift unit 16 receives the contents of source/destination register RB, which can be shifted in a logical or arithmetic manner to the left or to the right by 0 to 15 bits. The output of the shift unit is connected directly to the B input of the arithmetic and logic unit 17. This unit performs an operation between A and B.

Input A receives a file [sic] from register RA, a constant K, or data from a memory and input B, but only the output of shift unit 16.

The shift value is defined in the instruction code for an immediate shift operation or in register A2 for a dynamic shift.

Immediate shift: The instruction operand defines:
- a shift value from 0 to 15,
- a direction to the left or to the right,
- a logical or arithmetic shift.

Examples of sifts are given below.

| | | | |
|---|---|---|---|
| 1. | AND | A0, A1, L >> 15; | AND A0 & A1, shifted logically by 15 units to the right, result saved in A1. |
| 2. | AND | A0, A; | AND A0 & A1, result saved in A1. |
| 3. | AND | A0, A1, L << 1; | AND A0 & A1, shifted logically 1 bit to the right, result saved in A1. |
| 4. | AND | A0, A1, A >> 1; | AND A0 & A1, shifted arithmetically by 1 bit to the right, result saved in A1. |
| 5. | AND | A0, A1, A >> 15; | AND A0 & A1, shifted arithmetically by 15 bets to the right, result saved in A1. |

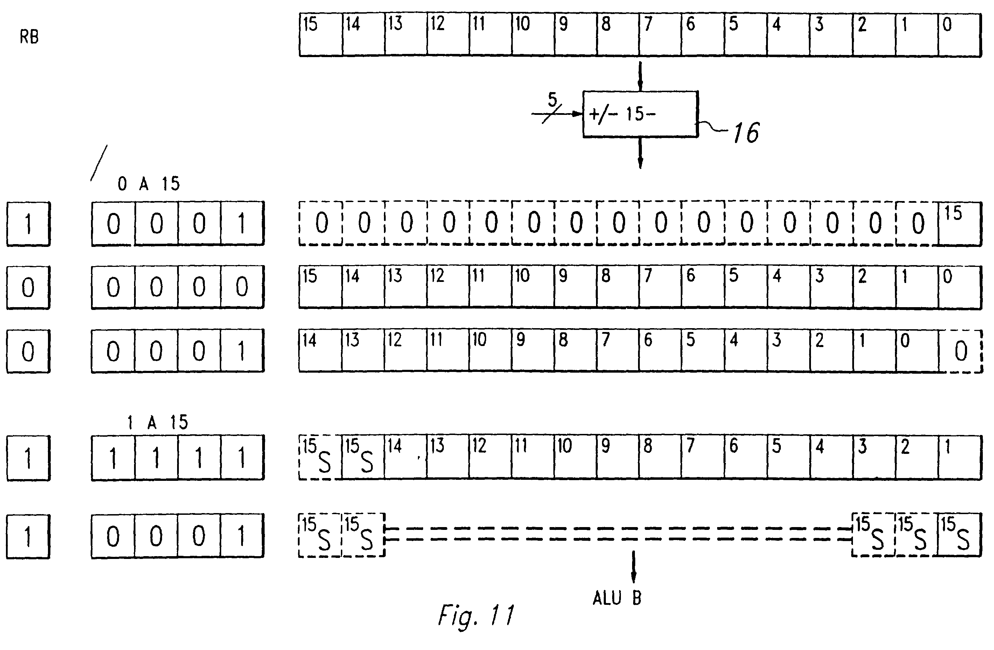

The codes for shifts of Examples 1 through 5 given below are shown on Figure 11, which shows an immediate shift.

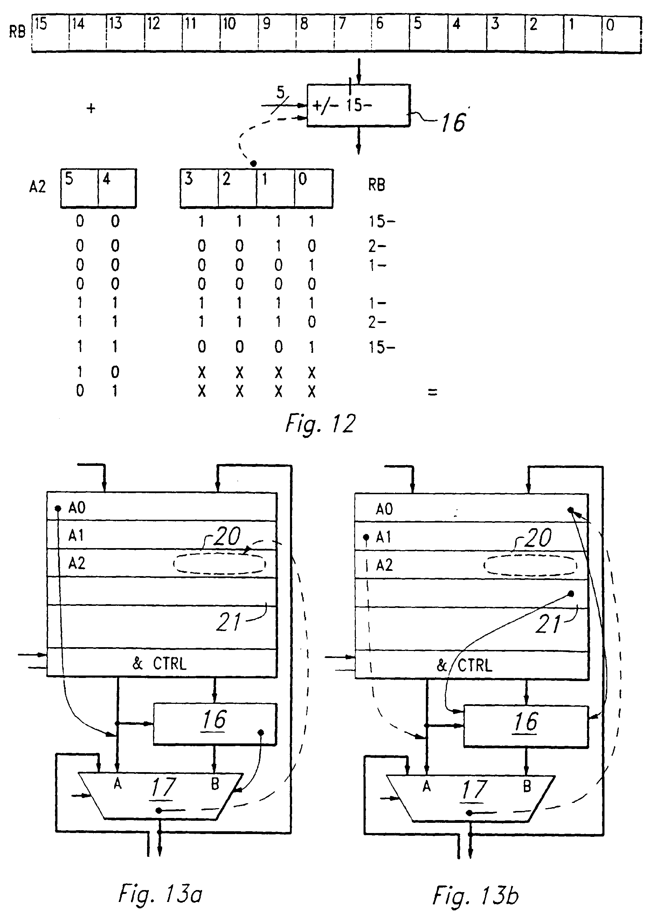

The dynamic shift shown in Figure 12 is a shift to the left, the number of bits to be shifted being a value with sign contained in register A2. This mode has the possibility of shifting RB from 32 to 31.

Normally, a leftmost 1 operation precedes a dynamic shift. The result of the LMO operation is the number of contiguous zeros, starting with the most significant bit of the source register.

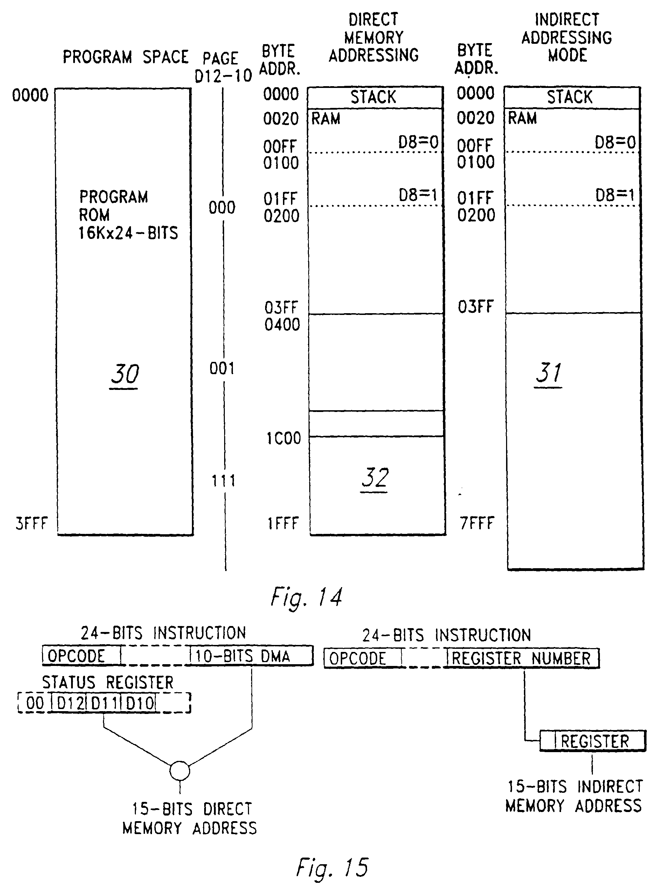

The result is placed in register A2 20. The dynamic shift operation places the first of the source register in a position of most significant bit. During execution of the LMO instruction (Figure 13a), the exponent of A0 is placed in A2.

The normalization instruction (Figure 13b) sifts A0 by a value defined in A2. The result of the operation between A1 (if requested) and A2 is shifted on returning to A2.

The organization of the memory of the BBSP will now be described with reference to Figure 14.

The BBSP makes use of a Harvard architecture with the data memory and program memory located in separate places.

The BBSP provides two separate address spaces for the program memory and the data memory.

Figure 14 shows the arrangements of the memory regions in a BBSP.

In the program space 30, the 14 bits of the program counter 6 of the BBSP can address 16-bit words 24 of program memory (Figure 1). The upper part of the memory contains the origin of the address vectors for an interrupt and a return to the initial state 2.2.2.

The data space contains a RAM, a ROM, and an input-output set, I/0; the address space 31 is contained between 0 and 7FFFh. It is organized in bytes (octets). All the addresses are byte addresses.

With an indirect-addressing mode, one can access 32 kilobytes of data space. The B or X registers contain an effective address of 15 bits.

In the direct-addressing mode, one can only reach the first 8 K bytes. The "DMA" instruction field contains an address shifted by 10 bits, and the status registers contain a page address of 3 bits.

The two most significant bits are set to zero, as shown in Figure 15, which shows a scheme of operand addressing.

It will be noted that the I/O space of inputs and outputs 32 is a 32-word space placed at the end of the data pages.

The BBSP uses a modified Harvard architecture, in which the data memory and the program memory are located in two separate spaces, which permits a complete overlapping of the calling and execution of the instructions.

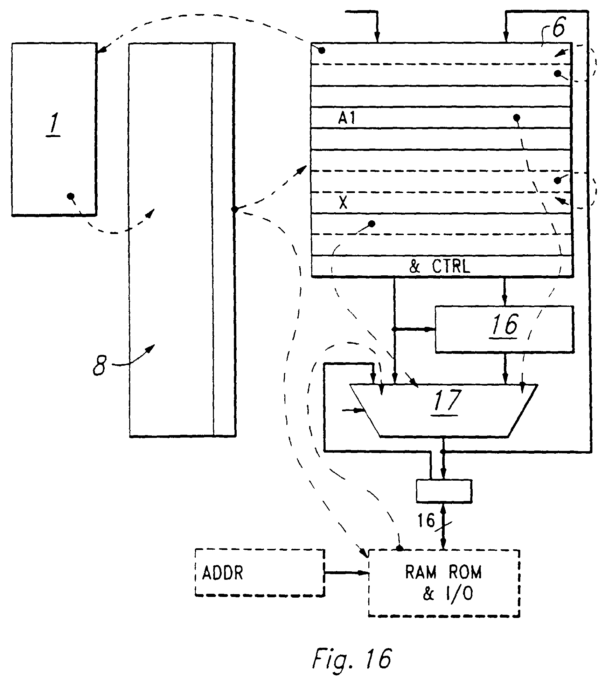

This overlapping is possible because of the two-level pipeline architecture adopted for the BBSP, as shown in Figure 16.

The pipeline architecture is the best compromise in terms of performance with respect to the number of transistors necessary and the energy consumed.

The pipeline of prefetching/decoding/execution is practically invisible to the user.

In the functioning of the pipeline, the operations of prefetching, decoding, and execution are independent, as is shown by the groups of arrows in Figure 16.

### First pipeline level.

1. The program counter 6 generates the next instruction address.
2. Instruction fetch.
3. Updating the program address.
4. Decoding the instruction

### Second pipeline level.

5. Generation of an operand address.
6. Reading of the operands.
7. Updating the addresses of the operands (if the addressing is indirect with postincrementing).
8. Execution and saving of the result in a destination register or in memory.

The BBSP instruction set will now be examined.

The BBSP has four instruction formats.

Instructions from register to register, which define an operation between two registers, Ra and Rb.

Indirect register instructions, concerning operations between a data-memory address, defined in register Ra, and register Rb.

Instructions from register to memory, concerning operations between a data-memory address, defined in the instruction field, and register Rb.

Command instructions, assuring control of the flow of program execution.

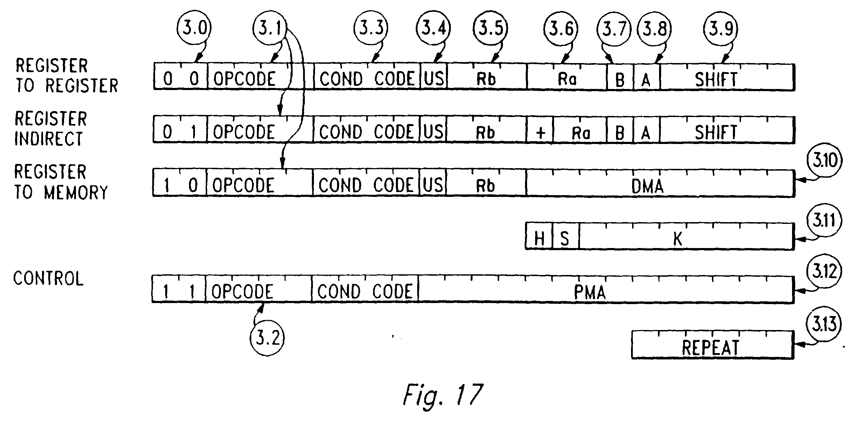

The instruction format will now be described with reference to Figure 17, which shows the four instruction formats listed above in the form of four lines.

The register-to-register, indirect-register, and register-to-memory instructions are integer instructions. The last format is the command instruction.

The format of the instruction is chosen in field 3.0.

All the instructions have a length of 24 bits in order to reduce the complexity of decoding and the dissipation of energy; the fields for instruction format 3.0, opcode 3.1 or 3.2 of the condition code 3.3 are identical.

For integer instructions, the updating status 3.4 and the source/destination register 3.5 are common.

The other fields depend on the format. The type of instruction is decoded in the control part 8 of the core of the BBSP (Figure 1).

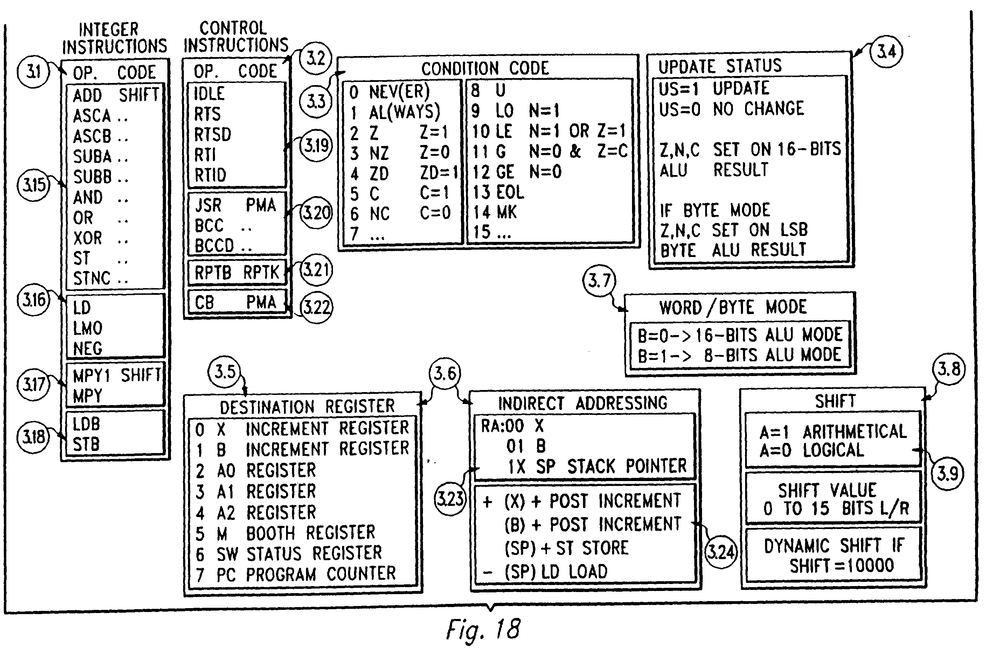

The instruction codes are shown in detail in Figure 18.

The opcodes (operation codes) of the integer instructions are divided into four categories.
- operations with shifting of the operand 3.15.
- operations without shifting 3.16.
- operations of multiplications 3.17.
- byte transfer 3.18.

The instructions with destination shifting are:
- Addition: ADD
- Addition/subtraction conditioned on A: ASCA
- Addition/subtraction conditioned on B: ASCB
- Subtraction A: SUBA
- Subtraction B: SUBB
- ET: AND
- OU: OR
- Exclusive OR: XOR

The instructions with source shifting are:
- Storage: ST
- Conditional storage: STNC
- Multiplication: MPY
- Multiplication 1: MPY1
- Conditional byte storage: STB

The instructions without shifting are:
- Loading: LD
- Left-most one: LMO
- Negation: NEG

The opcode command instructions presented in [3.2] of Figure 18 are divided into three categories.
- Instructions without operand 3.19.
- Instructions with program-memory address 3.20, 3.22.
- Instructions with repetition value 3.21.

The opcode instructions direct the functioning of the arithmetic and logic unit 17.

The condition codes are represented by field 3.3 in Figure 17. They select the execution condition for an instruction. The various conditions are presented in 3.3 of Figure 18.

The condition chosen is compared with the contents of the current status. If the condition is true, the destination operand is modified by the result of the execution of the current operation.

If the condition is not true, the destination is not modified.

The status update is shown by field 3.4 in Figure 17.

If the US status update bit is a 1, the status is updated with the result of the execution of the current operation in the ALU 17. In word mode, the status is set to the 16-bit result of the ALU. In byte mode, B = 1, the status is set to the 8-bit result of the ALU.

If the US bit is not selected, the status is not modified.

Source and destination registers:

The Rb field selects the source/destination register.

The contents of the Rb register are connected to input B of the ALU 17 through the shift unit 16.

Source or indirect-addressing register:

In the register-to-register format, Ra 3.6, one selects the source register that is connected to input A of the ALU 17.

In indirect addressing, the indirect field, Ra 3.23, 3.24, selects a register that contains the address of the data in the memory. The register can be autoincremented after execution of an instruction.

All the instructions other that the control instructions can have only the format of a byte or of a word.

These instructions are:
- Addition: ADD
- AND operation: AND
- Addition/subtraction conditioned on A: ASCA
- Addition/subtraction conditioned on B: ASCB
- Loading: LD
- Left most one: LMO
- Multiplication 1: MPY1
- Multiplication: MPY
- Negation: NEG
- OR operation: OR
- Storage: ST
- Conditional storage: STNC
- Subtraction A: SUBA
- Subtraction B: SUBB
- Exclusive-OR operation: XOR

The default value is the word format ("ADD A0, B"); by adding a .b afterwards, the mnemonic instruction becomes a byte instruction ("ADD.B, A0, B"). This element of modification can have the following consequences:
- if status updating is used, the status word will be updated with the least significant 8 bits of the result.
- in the indirect-addressing mode with auto-incrementing, the index will be incremented by 1 (instead of 2).
- the high-order byte of the 16 bits sent to the arithmetic and logic unit is set to 0, if the data come from the data memory.

It will be understood that in the byte mode, the arithmetic and logic unit (with the exception of the flag) functions in the 16-bit mode.

This means that the result placed in the destination register is a 16-bit result. The data coming from the source register are also 16-bit data.

This means that a shift to the right should be used with attention to the fact that the shift unit also functions int he 16-bit mode. When the data come from memory, the high-order byte is set to zero and is not modified when the data come from the register.

This means of byte identification could only be used for addressing from register to register or indirect addressing.

It cannot be used in direct addressing and immediate addressing.

It cannot be used in control instructions, either.

Three other byte instructions have been added:
- LDB: load byte
- STB: store byte
- CBB: compare byte and branch

LDB and STB can only be used with direct addressing.

They are not usable with register-to-register addressing and indirect addressing.

The register-to-register and indirect-register instructions contain a shift operand 3.8, which selects arithmetic or logic shifts, and a 5-bit field 3.9, which selects the shifting to the left or right and the value of the shift.

The DMA direct-memory-address field 3.10 shown in Figure 17 selects the address of the source operand connected to input A of the arithmetic and logic unit 17 when the condition codes 3.3 7 or 15 are selected.

This field is a constant with sign 3.11, which is used as a source operand connected to input A of the ALU 17. The ALU operation is executed between Rb and K. The result is in destination register Rb.

The PMA field 3.12 contains the program address that modifies the program counter with control instructions.

The repetition value is loaded into the repetition counter 22 (Figure 2) with an RPTB block-repetition instruction. The RPTB releases an instruction-repetition block which ends when the repetition counter is at zero and when the condition code EOL has been selected.

At each loop, the repetition counter is decremented by 1.

## Claims

1. A processor, comprising:
a program memory (1) for storing instructions,
a data memory (3) for storing data to be processed, the program memory and data memory having different address spaces,
a central processing unit (4) including an arithmetic logic unit (17) and a plurality of registers, connected to the data memory,
a program counter (6) for providing addresses to the program memory, and
a program controller (2) for receiving instructions from the program memory specified by the provided addresses to produce control signals in response to those instructions,
characterised in that
the program counter and at least one other of the said registers are each selectively connectable to the arithmetic logic unit as a source register or as a destination register.

2. A processor as claimed in claim 1, wherein the central processing unit comprises an incrementing device (11) for incrementing the program counter.

3. A processor as claimed in claim 1 or claim 2, in which the program counter (6) and the at least one other register are arranged in a stack (15).

4. A processor as claimed in claim 3, comprising a shift unit (16) connected between the stack of registers (15) and the arithmetic logic unit (17) permitting a logic or arithmetic shift to the left or the right of a register content to be performed before the execution of an operation on this content by the arithmetic and logic unit(17)

5. A processor as claimed in any preceding claim, wherein the or one of the other registers is a register (X, 25, B, 24) connected to an incrementing device (27, 16) which functions in parallel with the arithmetic logic unit (17) and is utilisable as an address register for indirect addressing.

6. A processor as claimed in any preceding claim, wherein the or one of the other registers is a register (20) connected to receive the result of a leftmost one operation, and is associated with a leftmost one operating block (21).

7. A processor as claimed in any preceding claim, wherein the or one of the other registers is a Booth shift multiplication register (M).

8. A processor as claimed in claim 7, wherein the multiplication by means of the Booth shift register is executed by a series of addition/shift instructions (MPY), the first one (MPY1) of which permits the initialisation of the multiplication sequence.

9. A processor as claimed in any preceding claim, wherein the or one of the other registers is a status or command register (SW).

## Patentansprüche

1. Prozessor, der enthält:
einen Programmspeicher (1) zum Speichern von Befehlen,
einen Datenspeicher (3) zum Speichern von zu verarbeitenden Daten, wobei der Programmspeicher und der Datenspeicher unterschiedliche Adressenräume besitzen,
eine Zentraleinheit (4), die eine Arithmetik-Logik-Einheit (17) und mehrere Register enthält, die mit dem Datenspeicher verbunden sind,
einen Programmzähler (6), der Adressen für den Programmspeicher bereitstellt, und
einen Programm-Controller (2) zum Empfangen von Befehlen vom Programmspeicher, die durch die bereitgestellten Adressen spezifiziert werden, um als Antwort auf diese Befehle Steuersignale zu erzeugen,
dadurch gekennzeichnet, daß
der Programmzähler und wenigstens ein anderes der Register jeweils mit der Arithmetik-Logik-Einheit als ein Quellregister oder als ein Zielregister wahlweise verbindbar sind.

2. Prozessor nach Anspruch 1, wobei die Zentraleinheit eine Inkrementierungsvorrichtung (11) zum Inkrementieren des Programmzählers enthält.

3. Prozessor nach Anspruch 1 oder 2, in dem der Programmzähler (6) und wenigstens ein anderes Register in einem Stapel (15) angeordnet sind.

4. Prozessor nach Anspruch 3, mit einer Schiebeeinheit (16), die zwischen den Registerstapel (15) und die Arithmetik-Logik-Einheit (17) geschaltet ist und eine logische oder arithmetische Verschiebung nach links oder nach rechts eines Registerinhalts ermöglicht, der vor der Ausführung einer Operation an diesem Inhalt durch die Arithmetik-Logik-Einheit (17) ausgeführt werden soll.

5. Prozessor nach einem vorhergehenden Anspruch, wobei das oder eines der anderen Register ein Register (X, 25, B, 24) ist, das mit einer Inkrementierungsvorrichtung (27, 16) verbunden ist, die parallel zu der Arithmetik-Logik-Einheit (17) arbeitet und als ein Adressenregister für eine indirekte Adressierung verwendbar ist.

6. Prozessor nach einem vorhergehenden Anspruch, wobei das oder eines der anderen Register ein Register (20) ist, das so angeschlossen ist, daß es das Ergebnis einer am weitesten links ausgeführten Operation empfängt, und einem am weitesten links befindlichen Operationsblock (21) zugeordnet ist.

7. Prozessor nach einem vorhergehenden Anspruch, wobei das oder eines der anderen Register ein Booth-Schiebemultiplikationsregister (M) ist.

8. Prozessor nach Anspruch 7, wobei die Multiplikation mittels des Booth-Schieberegisters durch eine Reihe von Additions-/Schiebebefehlen (MPY) ausgeführt wird, wovon der erste (MPY)1 die Initialisierung der Multiplikationssequenz ermöglicht.

9. Prozessor nach irgendeinem vorhergehenden Anspruch, wobei das oder eines der anderen Register ein Status- oder Befehlsregister (SW) ist.

## Revendications

1. Processeur, comprenant,
une mémoire de programme (1) pour mémoriser des instructions,
une mémoire de données (3) pour mémoriser des données devant être traitées, la mémoire de programme et la mémoire de données ayant différents espaces d'adresses,
une unité centrale de traitement (4) comprenant une unité arithmétique et logique (17) et une pluralité de registres, connectée à la mémoire de données,
un compteur de programme (6) pour fournir des adresses à la mémoire de programme, et
un contrôleur de programme (2) pour la réception d'instructions de la mémoire de programme spécifié par les adresses fournies afin de produire des signaux de commande en réponse à ces instructions, caractérisé en ce que
le compteur de programme et au moins le ou l'un des autres desdits registres peuvent chacun être connectés de manière sélective à l'unité arithmétique et logique en tant que registre source ou en tant que registre destinataire.

2. Processeur selon la revendication 1, dans lequel l'unité centrale de traitement comprend un dispositif d'incrémentation (11) pour l'incrémentation du compteur de programme.

3. Processeur selon la revendication 1 ou 2, dans lequel le compteur de programme (6) et au moins un autre registre sont disposés dans une pile (15).

4. Processeur selon la revendication 3, comprenant une unité de décalage (16) connectée entre la pile des registres (15) et l'unité arithmétique et logique (17) permettant un décalage logique ou arithmétique vers la gauche ou la droite du contenu d'un registre devant être effectué avant l'exécution d'une opération sur ce contenu par l'unité arithmétique et logique (17).

5. Processeur selon l'une quelconque des revendications précédentes, dans lequel le ou l'un des autres registres est un registre (X, 25, B, 24) connecté à un dispositif d'incrémentation (27, 16) qui fonctionne en parallèle avec l'unité arithmétique et logique (17) et est utilisable en tant que registre d'adresse pour un adressage indirect.

6. Processeur selon l'une quelconque des revendications précédentes, dans lequel le ou l'un des autres registres est un registre (20) connecté pour recevoir le résultat d'une opération sur le un le plus à gauche, et est associé avec un bloc opérationnel (21) sur le un le plus à gauche.

7. Processeur selon l'une quelconque des revendications précédentes, dans lequel le ou l'un des autres registres est un registre (M) multiplicateur à décalage de Booth.

8. Processeur selon la revendication 7, dans lequel la multiplication au moyen du registre à décalage de Booth est exécutée par une série d'instructions (MPY) d'addition/décalage, dont la première (MPY1) permet l'initialisation de la séquence de multiplication.

9. Processeur selon l'une quelconque des revendications précédentes, dans lequel le ou l'un des autres registres est un registre (SW) de statut ou de commande.
